# EUROPEAN PATENT SPECIFICATION

(11) **EP 4 186 231 B1**
(45) Date of publication and mention of the grant of the patent: **09.09.2026**
(21) Application number: 21754839.5
(22) Date of filing: 20.07.2021
(51) Int. Cl.: G06T 7/80, G06V 20/20, H04N 9/31, G06F 3/01

(54) **SYSTEM FOR AUGMENTED REALITY**
SYSTEM FÜR ERWEITERTE REALITÄT
SYSTÈME DE RÉALITÉ AUGMENTÉE

(30) Priority: 21.07.2020 IT 202000017653
(43) Date of publication of application: 31.05.2023
(73) Proprietor: Politecnico di Milano, 20133 Milano (IT)
(72) Inventor: CASCINI, Gaetano, 20156 Milano (IT); CARUSO, Giandomenico, 20156 Milano (IT); BECATTINI, Niccolò, 20156 Milano (IT); MOROSI, Federico, 20156 Milano (IT)
(74) Representative: Penza, Giancarlo
(86) International application number: PCT/IB2021/056551
(87) International publication number: WO 2022/018635

(56) References cited:
- US-A1- 2015 262 426

## Description

### TECHNICAL FIELD OF THE INVENTION

The present invention relates to a system for augmented reality and the method thereof for generating augmented reality images.

### PRIOR ART

Augmented reality technology allows to present digital contents by overlapping them at least partially with a real environment.

In this context the Spatial Augmented Reality (SAR) is of particular interest with which it is possible to project the digital content directly on one or more surfaces of a physical object, without requiring the use of individual devices such as special viewers for augmented reality.

The use of suitable tracking devices allows to update the projection to adapt it to the position and orientation of the physical object on which the projection is to be carried out when it is moved within the working area wherein the projection is being carried out.

The overlap of physical and virtual contents in the same environment improves the understanding of complex digital information thanks to a more effective representation of digital data, in terms of space and tangible properties, making a faster prototyping technique of real models available.

In fact, through the SAR technology it is possible to prepare a single physical object presenting the structural conformation of the product to be made and on which a digital content is simply projected, which can be easily updated, modified and applied in real time on the physical object. without the need to create a succession of physical models for each prototype to be created.

Another advantage of the SAR technology is that of allowing high flexibility of use due to the possibility of hands-free interactions with physical objects and without the use of viewers for viewing digital contents.

In general, a SAR system is thus composed of the physical objects on which the projection of digital contents is to be carried out, the projectors themselves and the tracking devices that are used to detect the three-dimensional position and the orientation of the physical object.

The known tracking devices are based on the use of optical, inertial, acoustic, mechanical, electromagnetic and radio sensors whose advantages and disadvantages are widely discussed in the literature.

Among the possible alternatives made available by the prior art, infrared (IR) optical tracking devices are the most common in the field of SAR applications thanks to the tracking accuracy, the limited sensitivity to partial occlusions of the visual field and the use of limited invasive markers for the recognition of the physical object to be augmented, or on which the projection of the digital content must be carried out.

However, all known tracking devices, even those of the infrared type, are affected by drawbacks and limitations which make the spread and use of the SAR technology difficult, especially in the industrial field.

In fact, in order to operate, the known systems require expensive and complex configuration procedures to be executed in which a plurality of operating parameters of the projectors and of the tracking system itself are initialized to allow the coupling between the two and the subsequent alignment between the physical object and the virtual representation thereof.

This configuration procedure is not very flexible and unable to adapt to possible structural changes in the system or even just some of the parts thereof or to changes in the environmental conditions in which the system operates.

Furthermore, both the structural complexity and the operational level of known tracking systems require the intervention of highly qualified personnel in order to guarantee the correct use thereof.

US 2015/262426 A1 discloses a spatial reality system comprising a tracking system for receiving input, and the tracking of projection surfaces of objects that are in motion.

### SUMMARY OF THE INVENTION

In this context, the technical task underlying the present invention is to propose a system for augmented reality which overcomes at least some of the drawbacks of the prior art cited above.

In particular, it is an object of the present invention to provide a system for augmented reality capable of identifying in a simple and efficient manner the relative position between the projector and the physical object on which the digital content is to be projected.

The technical task set and the objects specified are substantially attained by a system for augmented reality, comprising the technical features set forth in one or more of the appended claims.

According to the present invention, a system according to claim 1 for augmented reality is shown which comprises at least one projector, a detection surface and at least one marker.

The projector is configured to project a digital image onto a physical object inside a projection volume.

The at least one marker is couplable to the physical object and it is adapted to engage the detection surface in at least one point of contact, thereby generating a detection signal representative of one or more properties of the point of contact.

In particular, the detection surface is configured to identify in use an absolute position and an orientation of the physical object coupled to the marker inside the projection volume as a function of the information content of the detection signal.

Therefore the detection of the arrangement of the physical object inside the projection volume (and thus with respect to the projector) takes place through the physical contact between the object itself and the detection surface created by means of the marker, thus obtaining a mechanism of particularly reliable and precise detection.

It is also an object of the present invention a method for displaying in augmented reality a digital content which is performed by engaging in at least one point of contact a physical object with a detection surface.

Preferably, the contact between the physical object and the detection surface is mediated by a marker interposed between the two which defines one or more properties of the point of contact, in particular a conformation (i.e. the shape), the dimensions and a positioning of the point of contact inside the detection surface.

Therefore it is generated a detection signal representative of one or more properties of the at least one point of contact according to which an absolute position and an orientation of the physical object inside the projection volume are identified.

Finally, once the position of the physical object is known, the digital content can be projected onto it.

The dependent claims, incorporated herein by reference, correspond to different embodiments of the invention.

### BRIEF DESCRIPTION OF THE DRAWINGS

Further characteristics and advantages of the present invention will become more apparent from the indicative and thus non-limiting description of a preferred, but not exclusive, embodiment of a system for augmented reality, as illustrated in the accompanying drawings, wherein:
- Figure 1A schematically shows a possible embodiment of some components of a system for augmented reality;
- Figure 1B schematically indicates some components of the system highlighting the signals used for the operation thereof;
- Figures 2A-2C show possible embodiments of respective configurations of use in which a marker is applied to a physical object.

### DETAILED DESCRIPTION OF THE INVENTION

In the appended figures, the numerical reference 1 indicates in general a system for augmented reality, to which reference is made in the following of the present description simply as system 1.

Structurally, the system 1 comprises at least one projector 2, a detection surface 3, at least one marker 4 and a processing unit 5 (for example, a microprocessor).

The projector 2 is configured to project a digital content onto a physical object "O" inside a projection volume "P" which is within the visual field of the projector 3.

The digital content encloses, for example, graphic information projected directly on the external surface of the physical object "O".

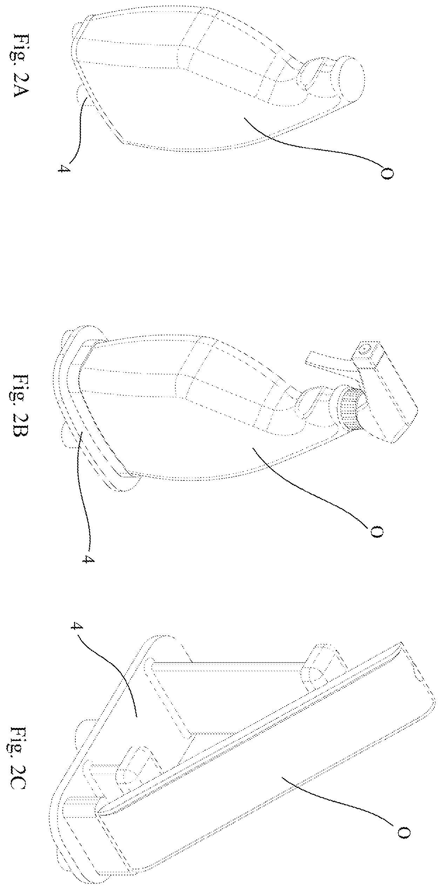

In accordance with a preferred embodiment, illustrated in Figure 2B, the detection surface 3 helps to define the projection volume "P", that is to say that the projector 2 is arranged in such a way as to enclose the detection surface 3 inside one's visual field.

Alternatively, the projection volume "P" could be at least partially or completely disjoint with respect to the detection surface 3, that is to say that the latter is placed at least partially or completely outside the visual field of the projector 2.

In this way it is possible to project digital contents even onto physical objects "O" which have shapes and/or dimensions such that they extend even outside the edges of the detection surface 3.

The detection surface 3 is preferably flat and cooperates with the at least one marker 4 to determine the position and orientation of the physical object "O" with respect to the at least one projector 2 inside this projection volume "P".

The projector 2 has a relative position and orientation in space with respect to the detection surface 3 which are known; for example, as it will be explained in greater detail below, the projector 3 can be mechanically connected integrally to the detection surface 3.

More in detail, as it will be further explained below, the at least one marker 4 is a support which is couplable, preferably in a reversible manner, or which is integrable into the physical object "O".

The at least one marker 4 is further adapted to engage the detection surface 3 in at least one point of contact.

Operationally, the relative position and orientation between the projector 2 and the physical object "O" is determined by combining the following information:
- relative position and orientation of the projector 2 with respect to the detection surface 3 (known by construction or calculated during the operation of the system 1);
- relative position and orientation of the physical object "O" with respect to the detection surface 3, obtained by means of:
   - mechanical coupling of the physical object "O" with the marker 4;
   - contact between the marker 4 and the detection surface 3, in one or more points of contact.

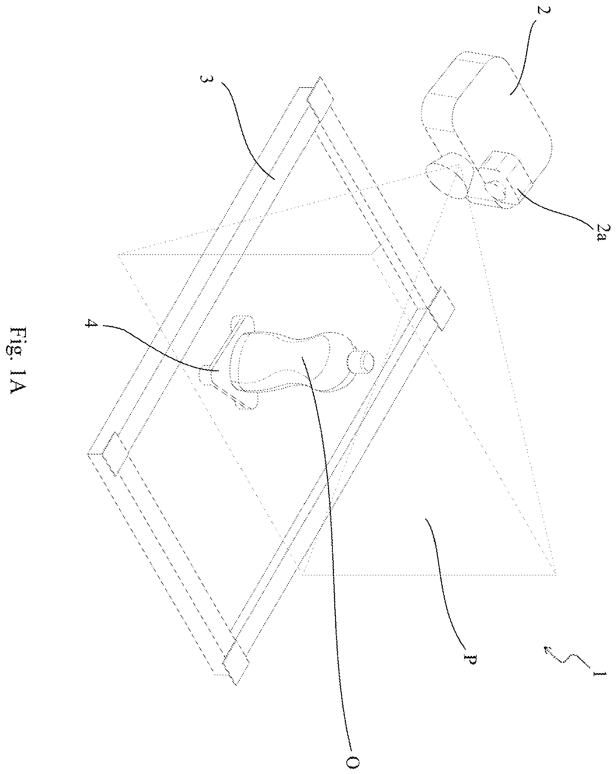

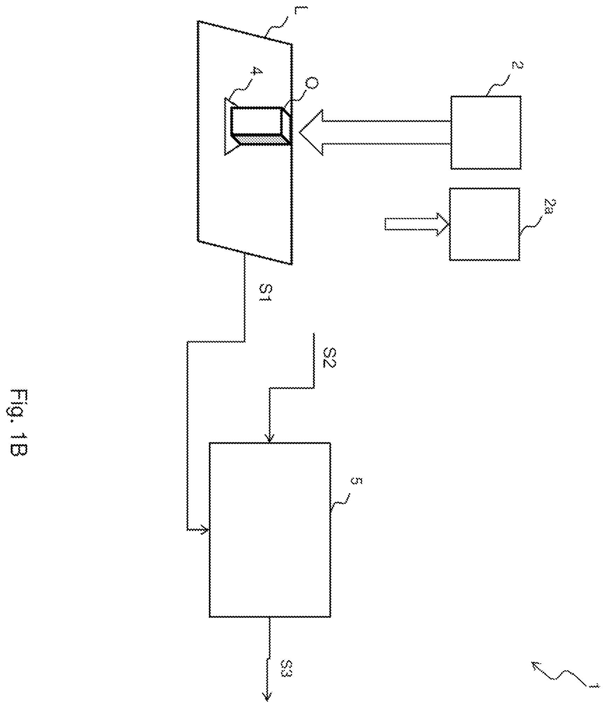

In detail, as represented in Figure 1B, the processing unit 5 receives at the input a detection signal "S1" representative of one or more properties of the at least one point of contact and receives a reference signal "S2" representative of the relative position and orientation between the projector 2 and the detection surface 3.

As a function of these two pieces of information, the processing unit 5 generates the operating signal "S3" by which the position and orientation of the object "O" inside the projection volume "P" is indicated to the projector 2.

In this way, the projection of the digital content onto the surface of the physical object "O" is kept updated based on the position and orientation of the object "O" itself.

The interaction between the detection surface 3 and the marker 4 when the latter is leaning thereon, leads to the generation of said detection signal "S1", which is representative of one or more properties of the point of contact.

In other words, the detection signal "S1" is a signal representative of at least one property of the point of contact which is defined when the marker 4 is placed in contact with the detection surface 3.

The term "properties of the point of contact" means for example the geometry of the point of contact, such as in detail the shape of the area defined by the point of contact, the dimension of the area defined by the point of contact and the distance of the point contact on the detection surface 3.

Consequently, the term "point of contact" does not only mean the point as an entity of Euclidean geometry that has no dimensions, but more generally with "point of contact" it is intended the physical portion of the marker 4 which is arranged to engage the detection surface 3, wherein said physical portion of the marker 4 defines a contact area having a specific predefined shape and dimension.

In general, the specific characteristics that can be monitored by the detection surface 3 (and thus integrated into the information content of the detection signal "S1") depend on the specific structure and interaction existing between the detection surface 3 and the at least one marker 4.

For example, the detection surface 3 has a flat rectangular shape: in this case a Cartesian plane is defined on the flat detection surface 3 and the properties of the points of contact are the Cartesian coordinates of the points of contact between the detection surface 3 and the marker 4.

In general, the marker 4 is configured to interact with the detection surface 3 in such a way as to generate the detection signal "S1" when these two components are in mutual contact.

This detection signal "S1" is representative of the specific interaction established between the detection surface 3 and the marker 4 and it is used by the detection surface 3 itself to determine the positioning of the marker 4 (thus of the physical object "O" to which the latter is coupled) inside the detection surface 3.

In use, the detection surface 3 is thus configured to identify an absolute position and an orientation of the marker 4 inside it, allowing the processing unit to calculate the position in the three-dimensional space defined by the projection volume "P" of the physical object "O" coupled to marker 4 as a function of the detection signal "S1", i.e. of the characteristics of the point of contact as they are detected by the detection surface 3.

In other words, the detection of the positioning and of the orientation of the physical object "O" inside the projection volume "P" is subject to the establishment of an interaction between the marker 4 associated with this physical object "O" and the detection surface 3.

Therefore, the detection surface 3 interacts with the marker 4 obtaining from this interaction the information of interest which allows the projector 2 to correctly apply the digital content onto the physical object "O".

The processing unit 5 has the function of calculating the relative position and orientation between the projector 2 and the physical object "O".

In particular, the processing unit 5 is configured to receive the detection signal "S1" and calculate therefrom a relative position and orientation between the detection surface 3 and the physical object "O"

Furthermore, the processing unit 5 is configured to calculate a relative position and an orientation between the at least one projector 2 and the physical object "O", as a function of a relative position and orientation between the at least one projector 2 and the detection surface 3 (reference signal S2) and as a function of said relative position and orientation between the detection surface and the physical object.

The relative position and orientation between the at least one projector 2 and the detection surface 3 can be known in advance by means of the reference signal S2 (and thus it is a system configuration value), or it can be calculated by using an optical sensor 2a integrally connected to the at least one projector 2 and oriented towards the detection surface 3.

In detail, the processing unit 5 is integrable into the detection surface 3 or it can be made by means of a further external component connected or connectable with the other components of the system 1.

Furthermore, the processing unit 5 can comprise a memory for storing the unique coupling between a given marker 4 and the physical object "O" associated therewith.

In other words, the processing unit 5 contains a piece of information that allows the system to uniquely identify the shape, the dimension and the orientation of the physical object once the specific marker 4 which is interacting with the detection surface 3 has been recognized.

This information can be contained in a preset memory in which each marker 4 is coupled to a specific physical object "O", indicating in particular in which point of the physical object "O" the marker 4 is applied.

The memory is also configurable by a user in order to modify the information contained therein, so as to allow system 1 to take into account any structural changes that are made to the physical object "O" or to allow the user to couple a certain marker 4 to a new physical object "O".

Preferably, the detection surface 3 comprises a first portion configured to be engaged by the at least one marker 4 and a second portion in which for example a user interface can be displayed.

In accordance with a possible embodiment, the first and second portion are distinct and separate from each other, so as to define a zone aimed solely at supporting the physical object "O" coupled to the marker 4 and a zone used for example for presenting information and/or receiving inputs from a user.

In this context, the visual field of the projector 2 can also coincide only with the first portion since it may not be necessary to project digital contents inside the second portion.

In accordance with a further possible embodiment, the first and second portion are at least partially overlapped, preferably the first and second portion are completely overlapped.

In other words, the first and second portion can coincide, so that the entire detection surface 3 can be used to define both a leaning zone for the detection of the physical object "O" and a user interface at the same time.

In both contexts outlined above, the second portion can present a user interface made by means of an output video peripheral with which the user is provided with information on the operating conditions of the system 1 or data and information related to the digital content being projected or even related to the physical object "O" on which the projection is being carried out.

Alternatively, the second portion can present a user interface made by means of both an output and input peripheral, for example a touchscreen, in such a way as to allow configuring this second portion not only for the presentation of information to a user, but also as a control interface through which the user can modify the operating conditions of the system 1.

By way of example, through this user interface, the user can modify the digital content that is projected onto the physical object "O" and/or one or more operating parameters of the projector 2 (brightness, colour tone, focus ...), of the detection surface 3 or of the marker 4.

In particular, the detection surface 3 can comprise a multi-touch screen of the capacitive type which extends over at least part of the first portion and/or of the second portion.

Preferably, the touchscreen extends over the entire detection surface.

In accordance with these aspects, the detection surface 3 is thus defined by a touchscreen and the detection signal "S1" is preferably a signal of the capacitive type generated by the contact of the marker 4 with the detection surface 3.

More in detail, the marker 4 is configured to engage the detection surface in a single point of contact which has a rotationally asymmetrical conformation (i.e. a shape) and the detection signal "S1" has an information content that uniquely identifies the conformation (i.e. shape) of this point of contact.

The term rotationally asymmetrical means that it is possible to determine at any time in a precise and unique way how the point of contact (and thus the marker 4 in general) is oriented (i.e. the direction) with respect to a reference point that can be defined by an absolute reference (a specific spatial coordinate such as a cardinal point) or a relative reference (a preset point of the detection surface 3 or the position of the projector 2).

In other words, the marker 4 has a conformation (i.e. a structure) such that when it interacts with the detection surface 3, it engages it in a point of contact which has a conformation (i.e. the shape) whereby the determination of the orientation of the marker 4 inside the detection surface 3 in a unique manner and thus the calculation of the position/orientation in the projection volume "P" of the physical object "O" coupled thereto are immediate.

Alternatively, the marker 4 is configured to engage the detection surface in a plurality of points of contact that define and delimit as a whole a rotationally asymmetrical shape (i.e. a contour) and the detection signal "S1" has an information content that identifies in a unique manner the conformation (i.e. the shape) of this shape (contour).

In accordance with a preferred embodiment, the marker 4 comprises a pedestal which is couplable to a face of the physical object in which the points of contact with the detection surface are defined by the leaning point(s) for this pedestal.

In detail, the marker 4 can be made as one piece or integrated with the physical object "O", for example the marker 4 can be co-moulded or coextruded during the realisation of the physical object "O".

In this context, the marker thus defines a portion, for example, of a face of the physical object "O" and it is bound thereto in an irreversible manner.

Alternatively, the marker 4 can be made by means of a distinct element that is reversibly or irreversibly applicable to the physical object "O".

In this context, the marker 4 can be made for example by means of a pedestal having a coupling means, preferably a coupling means of a mechanical type such as clamps or a snap coupling device.

In accordance with an aspect of the present invention, the system 1 comprises a plurality of markers which are couplable to respective distinct faces of the physical object "O", each of which is configured to generate a respective unique detection signal "S1".

It is also possible to provide one or more markers 4 integrated into the physical object "O" used in combination with one or more markers 4 which are couplable thereto.

In this way it is possible to rotate the physical object "O" around each of its axes while always keeping one of the faces thereof in contact with the detection surface 3 by means of the respective marker thereof 4.

In fact, in each face there is a different marker 4 which, by means of the information content enclosed in the detection signal "S1" (generated by the interaction of that specific marker 4 with the detection surface 3), allows to easily and uniquely determine the orientation and the position in space of the physical object "O".

The system 1 can further comprise a support frame coupled with the detection surface 3 and with the at least one projector 2 so as to support the at least one projector 2 in a position that is fixed and predetermined with respect to the detection surface 3.

In this way, during the use of the system 1, the relative position between the projector 2 and the detection surface 3 is always kept fixed, making the system more stable and avoiding the risk of accidental movements of the projector 2 which could accidentally misalign the projection of the digital content with respect to the physical object "O".

Alternatively, in accordance with a further aspect of the present invention, the system 1 comprises a three-dimensional movement member coupled with the at least one projector 2 and configured to move it with respect to the detection surface 2.

In this way the system 1 is more elastic allowing the position of the projector 2 to be modified according to the operational needs of use, for example according to the dimensions or shape of the physical object "O" onto which the content is to be projected digital.

In order to guarantee also in this context at all times the positioning of the projector with respect to the detection surface 3, thus with respect to the physical object "O", the system further comprises an optical sensor 2a configured to determine a relative position between the projector 2 and the detection surface 3.

Said optical sensor 2a may comprise for example a video camera or a camera or any sensor capable of detecting the presence of the detection surface 3 so as to be able to determine the relative position thereof with respect to the projector 2.

For this purpose, the detection surface 3 can in turn comprise an indicator couplable to the optical sensor 2a or in any case configured to be uniquely detected by the optical sensor 2a in order to determine the position thereof.

More in detail, the optical sensor 2a is configured to determine the relative position between the projector 2 and the detection surface 3 by means of at least one of the following algorithms: triangulation, contour recognition or pattern matching.

Advantageously, the detection surface 3 (for example of the multi-tactile type) comprises one or more visual indicators positioned along at least part of the edge of the same detection surface 3: this allows to facilitate the identification of the position and orientation of the detection surface 3 with respect to the projector 2.

For example, the detection surface has a rectangular shape: in this case there is a visual indicator (for example, a notch) positioned in a vertex of the rectangle.

According to a possible embodiment, the system 1 comprises a plurality of projectors 2 which are arranged around the detection surface 3 so as to define in use a visual field of 360° around the physical object "O".

In other words, the projectors 2 are positioned so as to allow the application of a digital content on all the faces of the physical object "O" at the same time, regardless of the shape of this physical object "O".

In this way it is possible to simultaneously use the entire available surface of the physical object "O" as a support for the projection of digital contents, thus allowing more complete information to be available.

In general, each projector 3 is couplable to a fixed frame or to a three-dimensional movement member.

The system 1 can further comprise at least one output peripheral configured to generate a sensor signal which can be used to provide the user with further information regarding the operating conditions of the system 1 or the physical object "O".

In detail, the at least one output peripheral is configured to generate a sensor signal comprising at least one of: an optical signal, an acoustic signal, a tactile signal, an olfactory signal, a vibrational signal.

Preferably, the at least one output peripheral is integrated with the detection surface or with any other structural component of the system 1 (such as for example the projector 2).

Alternatively, the at least one output peripheral can be made by means of a distinct and separate component preferably placed in correspondence of or adjacent to the detection surface 3 and connected thereto or to another component of the system 1 to be activated by the latter, for example as a function of the characteristics of the digital content being projected.

Alternatively, the system 1 can comprise a plurality of output peripherals of which at least one is integrated with the detection surface (or with a further component of the system 1) and at least one made by means of a distinct and separate component.

Advantageously, the present invention achieves the proposed objects, overcoming the drawbacks complained of in the prior art by providing the user with a system for augmented reality which allows to identify precisely and efficiently in a continuous manner the positioning and the orientation of the physical object onto which it is wished to project the digital content.

In this way, during the use of the system 1, a high quality level of the projection process is guaranteed as the projector 2 will always apply the digital content onto the physical object "O" in a precise and correct manner.

The present invention also relates to a method according to claim 15 for displaying in augmented reality a digital content.

In particular, the method described herein is preferably executable using a system for augmented reality having one or more of the characteristics discussed above.

Operationally, the method is executed by engaging in at least one point of contact a physical object "O" with a detection surface 3.

In other words, the physical object "O" is leaning on the detection surface 3.

As indicated above in the discussion related to system 1, the physical object "O" is associated with a marker 4 (integrated or not into the physical object "O" itself) specially designed to interact with the detection surface 3.

As a function of the interaction that is established between the detection surface 3 and the physical object "O", a detection signal "S1" is generated which is representative of one or more properties of the at least one point of contact, in particular of a conformation (i.e. a rotationally asymmetric shape) and a position of the point of contact within the detection surface 3.

The information contained in the detection signal "S1" thus allows identifying an absolute position and an orientation of the physical object "O" inside a projection volume "P".

Once the position and orientation of the physical object "O" has been established, the desired digital content is projected onto it.

Subsequently, the property of the point of contact of interest is continuously monitored and whenever a variation thereof is identified, a new detection signal "S1" is generated which identifies the new absolute position and the orientation of the physical object "OR".

Furthermore, a possible variation of at least one property of the point of contact could also be determined from a change of the marker 4 present on the detection surface 3 (for example because the physical object "O" onto which a projection is to be made has been replaced), thus the method also provides for identifying the specific marker 4 which engages the detection surface 3 whenever the properties of the point of contact change.

In particular, this identification can be performed by inspecting certain properties of the point of contact, i.e. each marker 4 could be uniquely associated with a particular conformation (shape) and/or dimension of the point of contact (intended as an area) that it defines when it engages the surface detection 3.

In this context, the new detection signal "S1" will be uniquely recognised as generated by a specific marker 4 and thus by a specific physical object "O" associated with this marker 4, thus allowing the digital content to be projected correctly taking into account the absolute position of the orientation and also of the conformation (structure) of the physical object "O" inside the projection volume "P".

Advantageously, the present invention achieves the proposed objects, overcoming the drawbacks complained of in the prior art by providing the user with a method for displaying in augmented reality an easy-to-execute digital content which reduces the burden and the complexity in particular of the operations of preparation and installation of the system 1 in charge of augmenting a physical object "O".

## Claims

1. System for augmented reality comprising:
- at least one projector (2) configured to project a digital content onto a physical object (O) inside a projection volume (P);
- at least one marker (4);
- a detection surface (3) configured to interact with the at least one marker (4) for generating a detection signal (S1) when the at least one marker is in contact with the detection surface;
wherein the at least one marker (4) is couplable with or integrable into the physical object (O) and it is adapted to engage the detection surface (3) in at least one point of contact defining a contact area on the detection surface (3) having a defined shape and dimension, generating the detection signal (S1) representative of one or more properties being the shape or dimension of the contact area defined by the at least one point of contact;
the system further including a processing unit (5) configured to:
• receive a configured or calculated value of a relative position and orientation between the at least one projector and the detection surface, wherein the configured value is obtained from a reference signal representative of the relative position and orientation between the projector (2) and the detection surface (3), and wherein the calculated value is obtained by using an optical sensor (2a) integrally connected to the at least one projector (2) and oriented towards the detection surface (3);
• receive the detection signal (S1) and calculate therefrom a relative position and orientation between the detection surface and the physical object;
• calculate a relative position and orientation (S3) between the at least one projector and the physical object, as a function of the relative position and orientation (S2) between the at least one projector and the detection surface and as a function of said relative position and orientation between the detection surface and the physical object.

2. System according to claim 1, wherein the detection surface (3) comprises a touchscreen and the detection signal (S1) is an electric signal generated as a function of the contact between the marker and the detection surface in the at least one point of contact.

3. System according to claim 1 or 2, wherein the detection surface (3) comprises a first portion that is engageable by the marker (4) and a second portion configured to display a user interface.

4. System according to claim 3, wherein the first and the second portion are at least partially overlapped, preferably the first and the second portion are completely overlapped.

5. System according to any one of the preceding claims, wherein the marker (4) is configured to engage the detection surface (3) in a single point of contact having a rotationally asymmetric-shape, said detection signal (S1) being representative of the shape of said point of contact.

6. System according to one or more of the preceding claims 1 to 4, wherein the marker (4) is configured to engage the detection surface (3) in a plurality of points of contact defining a rotationally asymmetric contour, said detection signal (S1) being representative of the shape of said contour.

7. System according to any one of the preceding claims, wherein the at least one marker (4) comprises a pedestal couplable with a face of the physical object (O).

8. System according to any one of the preceding claims, comprising a plurality of markers (4) couplable with or integrable into respective distinct faces of the physical object (O), each marker (4) being configured to generate a respective unique detection signal (S1).

9. System according to any one of the preceding claims, comprising at least one physical object (O), said at least one marker (4) being coupled with or integrated into a face of said physical object (O).

10. System according to any one of the preceding claims, comprising a support frame coupled with the detection surface (3) and with the at least one projector (2) so as to support the at least one projector (2) in a position that is fixed and predetermined with respect to the detection surface (3).

11. System according to any one of preceding claims 1 to 9, comprising a three-dimensional movement member coupled with the at least one projector (2) to move said projector (2) with respect to the detection surface (3).

12. System according to claim 11, comprising an optical sensor (2a), in particular integrally connected to the at least one projector and oriented towards the detection surface, wherein the processing unit is further configured to determine the relative position between the projector (2) and the detection surface (3) by means of at least one of the following algorithms: triangulation, recognition of the contours or pattern matching.

13. System according to any one of the preceding claims, comprising a plurality of projectors (2) arranged around the detection surface (3) so as to define in use a visual field of 360° around the physical object (O).

14. System according to any one of the preceding claims, comprising at least one output peripheral configured to generate a respective sensor signal, said sensor signal comprising at least one of: an optical signal, an acoustic signal, a tactile signal, an olfactory signal, a vibrational signal, preferably said output peripheral being integrated with the detection surface (3).

15. Method for displaying in augmented reality a digital content projected by at least one projector (2), the method comprising the steps of:
- engaging in at least one point of contact a physical object (O) with a detection surface (3), said at least one point of contact defining a contact area on the detection surface (3) having a defined shape and dimension;
- generating a detection signal (S1) representative of one or more properties of the at least one point of contact, the one or more properties being the shape or dimension of the contact area;
- receiving a configured or calculated value of a relative position and orientation between the at least one projector and the detection surface, wherein the configured value is obtained from a reference signal representative of the relative position and orientation between the projector (2) and the detection surface (3), and wherein the calculated value is obtained by using an optical sensor (2a) integrally connected to the at least one projector (2) and oriented towards the detection surface (3);
- receiving the detection signal (S1) and calculating therefrom a relative position and orientation between the detection surface and the physical object;
- calculating a relative position and orientation (S3) between the at least one projector and the physical object, as a function of the relative position and orientation (S2) between the at least one projector and the detection surface and as a function of said relative position and orientation between the detection surface and the physical object;
- projecting a digital content on the physical object (O) inside a projection volume (P).

## Patentansprüche

1. System für erweiterte Realität, umfassend:
- mindestens einen Projektor (2), der dazu konfiguriert ist, innerhalb eines Projektionsvolumens (P) digitalen Inhalt auf ein physisches Objekt (O) zu projizieren;
- mindestens einen Marker (4);
- eine Erkennungsfläche (3), die dazu konfiguriert ist, mit dem mindestens einen Marker (4) zu interagieren, um ein Erkennungssignal (S1) zu erzeugen, wenn der mindestens eine Marker mit der Erkennungsfläche in Kontakt ist;
wobei der mindestens eine Marker (4) mit dem physischen Objekt (O) koppelbar oder in dieses integrierbar ist und dazu angepasst ist, die Erkennungsfläche (3) an mindestens einem Kontaktpunkt zu berühren, der eine Kontaktfläche auf der Erkennungsfläche (3) mit definierter Form und Größe definiert, wodurch das Erkennungssignal (S1) erzeugt wird, das eine oder mehrere Eigenschaften repräsentiert, nämlich die Form oder Größe der durch den mindestens einen Kontaktpunkt definierten Kontaktfläche;
das System umfasst ferner eine Verarbeitungseinheit (5), die zu Folgendem konfiguriert ist:
• einen konfigurierten oder berechneten Wert einer relativen Position und Ausrichtung zwischen dem mindestens einen Projektor und der Erkennungsfläche zu empfangen, wobei der konfigurierte Wert aus einem Referenzsignal erhalten wird, das die relative Position und Ausrichtung zwischen dem Projektor (2) und der Erkennungsfläche (3) repräsentiert, und wobei der berechnete Wert durch Verwendung eines optischen Sensors (2a) erlangt wird, der integrativ mit dem mindestens einen Projektor (2) verbunden und auf die Erkennungsfläche (3) ausgerichtet ist;
• das Erkennungssignal (S1) zu empfangen und daraus eine relative Position und Ausrichtung zwischen der Erkennungsfläche und dem physischen Objekt zu berechnen;
• eine relative Position und Ausrichtung (S3) zwischen dem mindestens einen Projektor und dem physischen Objekt zu berechnen, abhängig von der relativen Position und Ausrichtung (S2) zwischen dem mindestens einen Projektor und der Erkennungsfläche und abhängig von der relativen Position und Ausrichtung zwischen der Erkennungsfläche und dem physischen Objekt.

2. System nach Anspruch 1, wobei die Erkennungsfläche (3) einen Touchscreen umfasst und das Erkennungssignal (S1) ein elektrisches Signal ist, das als Funktion des Kontakts zwischen dem Marker und der Erkennungsfläche an dem mindestens einen Kontaktpunkt erzeugt wird.

3. System nach Anspruch 1 oder 2, wobei die Erkennungsfläche (3) einen ersten Bereich umfasst, der vom Marker (4) berührbar ist, und einen zweiten Bereich, der dazu konfiguriert ist, eine Benutzeroberfläche anzuzeigen.

4. System nach Anspruch 3, wobei sich der erste und der zweite Bereich zumindest teilweise überlappen, und vorzugsweise der erste und der zweite Bereich sich vollständig überlappen.

5. System nach einem der vorhergehenden Ansprüche, wobei der Marker (4) dazu konfiguriert ist, die Erkennungsfläche (3) an einem einzelnen Kontaktpunkt mit rotationsasymmetrischer Form zu berühren, wobei das Erkennungssignal (S1) die Form dieses Kontaktpunkts repräsentiert.

6. System nach einem oder mehreren der vorhergehenden Ansprüche 1 bis 4, wobei der Marker (4) dazu konfiguriert ist, die Erkennungsfläche (3) an mehreren Kontaktpunkten zu berühren, die einen rotationsasymmetrischen Umriss definieren, wobei das Erkennungssignal (S1) die Form dieses Umrisses repräsentiert.

7. System nach einem der vorhergehenden Ansprüche, wobei der mindestens eine Marker (4) einen Sockel umfasst, der mit einer Fläche des physischen Objekts (O) koppelbar ist.

8. System nach einem der vorhergehenden Ansprüche, umfassend eine Vielzahl von Markern (4), die mit jeweils unterschiedlichen Flächen des physischen Objekts (O) koppelbar oder in diese integrierbar sind, wobei jeder Marker (4) dazu konfiguriert ist, ein jeweils einzigartiges Erkennungssignal (S1) zu erzeugen.

9. System nach einem der vorhergehenden Ansprüche, umfassend mindestens ein physisches Objekt (O), wobei mindestens ein Marker (4) mit einer Fläche des physischen Objekts (O) gekoppelt oder in diese integriert ist.

10. System nach einem der vorhergehenden Ansprüche, umfassend einen Trägerrahmen, der mit der Erkennungsfläche (3) und mit dem mindestens einen Projektor (2) gekoppelt ist, um den mindestens einen Projektor (2) in einer gegenüber der Erkennungsfläche (3) festen und vorbestimmten Position zu tragen.

11. System nach einem der vorhergehenden Ansprüche 1 bis 9, umfassend ein dreidimensionales Bewegungselement, das mit dem mindestens einen Projektor (2) gekoppelt ist, um diesen Projektor (2) relativ zur Erkennungsfläche (3) zu bewegen.

12. System nach Anspruch 11, umfassend einen optischen Sensor (2a), der insbesondere integrativ mit dem mindestens einen Projektor verbunden und auf die Erkennungsfläche ausgerichtet ist, wobei die Verarbeitungseinheit ferner dazu konfiguriert ist, die relative Position zwischen dem Projektor (2) und der Erkennungsfläche (3) mittels mindestens eines der folgenden Algorithmen zu bestimmen: Triangulation, Erkennung der Konturen oder Mustervergleich.

13. System nach einem der vorhergehenden Ansprüche, umfassend mehrere Projektoren (2), die um die Erkennungsfläche (3) herum angeordnet sind, so dass im Betrieb ein Sichtfeld von 360° um das physische Objekt (O) definiert wird.

14. System nach einem der vorhergehenden Ansprüche, umfassend mindestens ein Ausgabegerät, das dazu konfiguriert ist, ein jeweiliges Sensorsignal zu erzeugen, wobei das Sensorsignal mindestens eines der folgenden umfasst: ein optisches Signal, ein akustisches Signal, ein taktiles Signal, ein olfaktorisches Signal, ein Vibrationssignal, wobei vorzugsweise das Ausgabegerät in die Erkennungsfläche (3) integriert ist.

15. Verfahren zur Anzeige eines digitalen Inhalts in erweiterter Realität, der von mindestens einem Projektor (2) projiziert wird, wobei das Verfahren die folgenden Schritte umfasst:
- Berührung eines physischen Objekts (O) mit einer Erkennungsfläche (3) an mindestens einem Kontaktpunkt, wobei der mindestens eine Kontaktpunkt eine Kontaktfläche auf der Erkennungsfläche (3) mit definierter Form und Abmessung definiert;
- Erzeugung eines Erkennungssignals (S1), das eine oder mehrere Eigenschaften des mindestens einen Kontaktpunkts repräsentiert, wobei die eine oder mehreren Eigenschaften die Form oder Abmessung der Kontaktfläche sind;
- Empfang eines konfigurierten oder berechneten Werts einer relativen Position und Ausrichtung zwischen dem mindestens einen Projektor und der Erkennungsfläche, wobei der konfigurierte Wert aus einem Referenzsignal erhalten wird, das die relative Position und Ausrichtung zwischen dem Projektor (2) und der Erkennungsfläche (3) repräsentiert, und wobei der berechnete Wert durch Verwendung eines optischen Sensors (2a) erlangt wird, der integrativ mit dem mindestens einen Projektor (2) verbunden und auf die Erkennungsfläche (3) ausgerichtet ist;
- Empfang des Erkennungssignals (S1) und Berechnung einer relativen Position und Ausrichtung zwischen der Erkennungsfläche und dem physischen Objekt daraus;
- Berechnung einer relativen Position und Ausrichtung (S3) zwischen dem mindestens einen Projektor und dem physischen Objekt, abhängig von der relativen Position und Ausrichtung (S2) zwischen dem mindestens einen Projektor und der Erkennungsfläche und abhängig von der relativen Position und Ausrichtung zwischen der Erkennungsfläche und dem physischen Objekt;
- Projektion eines digitalen Inhalts auf das physische Objekt (O) innerhalb eines Projektionsvolumens (P).

## Revendications

1. Système de réalité augmentée comprenant:
- au moins un projecteur (2) configuré pour projeter un contenu numérique sur un objet physique (O) à l'intérieur d'un volume de projection (P);
- au moins un marqueur (4);
- une surface de détection (3) configurée pour interagir avec le ou les marqueurs (4) afin de générer un signal de détection (S1) lorsque le ou les marqueurs sont en contact avec la surface de détection;
dans lequel le ou les marqueurs (4) sont couplables ou intégrables dans l'objet physique (O) et sont adaptés pour s'engager avec la surface de détection (3) en au moins un point de contact définissant une zone de contact sur la surface de détection (3) ayant une forme et une dimension définies, générant le signal de détection (S1) représentatif d'une ou plusieurs propriétés étant la forme ou la dimension de la zone de contact définie par le ou les points de contact;
le système comprenant, en outre, une unité de traitement (5) configurée pour:
• recevoir une valeur configurée ou calculée d'une position et orientation relatives entre le ou les projecteurs et la surface de détection, ladite valeur configurée étant obtenue à partir d'un signal de référence représentatif de la position et orientation relatives entre le projecteur (2) et la surface de détection (3), et ladite valeur calculée étant obtenue en utilisant un capteur optique (2a) intégré au moins au projecteur (2) et orienté vers la surface de détection (3);
• recevoir le signal de détection (S1) et en calculer une position et orientation relatives entre la surface de détection et l'objet physique;
• calculer une position et orientation relatives (S3) entre le ou les projecteurs et l'objet physique, en fonction de la position et orientation relatives (S2) entre le ou les projecteurs et la surface de détection et en fonction de ladite position et orientation relatives entre la surface de détection et l'objet physique.

2. Système selon la revendication 1, dans lequel la surface de détection (3) comprend un écran tactile et le signal de détection (S1) est un signal électrique généré en fonction du contact entre le marqueur et la surface de détection en au moins un point de contact.

3. Système selon la revendication 1 ou 2, dans lequel la surface de détection (3) comprend une première portion pouvant être engagée par le marqueur (4) et une seconde portion configurée pour afficher une interface utilisateur.

4. Système selon la revendication 3, dans lequel la première et la seconde portion sont au moins partiellement superposées, de préférence la première et la seconde portion sont complètement superposées.

5. Système selon l'une quelconque des revendications précédentes, dans lequel le marqueur (4) est configuré pour s'engager avec la surface de détection (3) en un point de contact unique ayant une forme asymétrique en rotation, ledit signal de détection (S1) étant représentatif de la forme dudit point de contact.

6. Système selon une ou plusieurs des revendications précédentes 1 à 4, dans lequel le marqueur (4) est configuré pour s'engager avec la surface de détection (3) en une pluralité de points de contact définissant un contour asymétrique en rotation, ledit signal de détection (S1) étant représentatif de la forme dudit contour.

7. Système selon l'une quelconque des revendications précédentes, dans lequel le ou les marqueurs (4) comprennent un piédestal couplable avec une face de l'objet physique (O).

8. Système selon l'une quelconque des revendications précédentes, comprenant une pluralité de marqueurs (4) couplables ou intégrables dans des faces distinctes respectives de l'objet physique (O), chaque marqueur (4) étant configuré pour générer un signal de détection (S1) unique respectif.

9. Système selon l'une quelconque des revendications précédentes, comprenant au moins un objet physique (O), le ou les marqueurs (4) étant couplés ou intégrés dans une face dudit objet physique (O).

10. Système selon l'une quelconque des revendications précédentes, comprenant un cadre de support couplé avec la surface de détection (3) et avec le ou les projecteurs (2) de manière à supporter le ou les projecteurs (2) dans une position fixe et prédéterminée par rapport à la surface de détection (3).

11. Système selon l'une quelconque des revendications 1 à 9 précédentes, comprenant un élément de mouvement tridimensionnel couplé avec le ou les projecteurs (2) pour déplacer ledit projecteur (2) par rapport à la surface de détection (3).

12. Système selon la revendication 11, comprenant un capteur optique (2a), en particulier intégré au moins au projecteur et orienté vers la surface de détection, dans lequel l'unité de traitement est en outre configurée pour déterminer la position relative entre le projecteur (2) et la surface de détection (3) au moyen d'au moins un des algorithmes suivants: triangulation, reconnaissance des contours ou appariement de motifs.

13. Système selon l'une quelconque des revendications précédentes, comprenant une pluralité de projecteurs (2) disposés autour de la surface de détection (3) de manière à définir en utilisation un champ visuel de 360° autour de l'objet physique (O).

14. Système selon l'une quelconque des revendications précédentes, comprenant au moins un périphérique de sortie configuré pour générer un signal de capteur respectif, ledit signal de capteur comprenant au moins un des éléments suivants: un signal optique, un signal acoustique, un signal tactile, un signal olfactif, un signal vibratoire, de préférence ledit périphérique de sortie étant intégré avec la surface de détection (3).

15. Méthode d'affichage en réalité augmentée d'un contenu numérique projeté par au moins un projecteur (2), la méthode comprenant les étapes consistant à:
- mettre un objet physique (O) en contact, en au moins un point de contact, avec une surface de détection (3), ledit au moins un point de contact définissant sur la surface de détection (3) une zone de contact présentant une forme et des dimensions déterminées;
- générer un signal de détection (S1) représentatif d'une ou plusieurs propriétés du ou des points de contact, ladite ou lesdites propriétés étant la forme ou la dimension de la zone de contact;
- recevoir une valeur configurée ou calculée d'une position et orientation relatives entre le ou les projecteurs et la surface de détection, ladite valeur configurée étant obtenue à partir d'un signal de référence représentatif de la position et orientation relatives entre le projecteur (2) et la surface de détection (3), et ladite valeur calculée étant obtenue en utilisant un capteur optique (2a) intégré au moins au projecteur (2) et orienté vers la surface de détection (3);
- recevoir le signal de détection (S1) et en calculer une position et orientation relatives entre la surface de détection et l'objet physique;
- calculer une position et orientation relatives (S3) entre le ou les projecteurs et l'objet physique, en fonction de la position et orientation relatives (S2) entre le ou les projecteurs et la surface de détection et en fonction de ladite position et orientation relatives entre la surface de détection et l'objet physique;
- projeter un contenu numérique sur l'objet physique (O) à l'intérieur d'un volume de projection (P).
